(19) Europäisches Patentamt
European Patent Office
Office européen des brevets

(11) **EP 2 082 919 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**15.08.2018   Patentblatt 2018/33**

(45) Hinweis auf die Patenterteilung:
**18.04.2012   Patentblatt 2012/16**

(21) Anmeldenummer: **08001347.7**

(22) Anmeldetag: **24.01.2008**

(51) Int Cl.:
**B60N 2/56** (2006.01)     **B60H 1/00** (2006.01)
**B60H 1/22** (2006.01)

(54) **Elektrische Zusatzheizung für ein Kraftfahrzeug**

Electric additional heating for a motor vehicle

Chauffage électrique d'appoint pour un véhicule automobile

(84) Benannte Vertragsstaaten:
**DE ES FR GB IT**

(43) Veröffentlichungstag der Anmeldung:
**29.07.2009   Patentblatt 2009/31**

(73) Patentinhaber: **Eberspächer catem GmbH & Co. KG**
**76863 Herxheim bei Landau (DE)**

(72) Erfinder:
• **Bohlender, Franz**
**76870 Kandel (DE)**
• **Zeyen, Michael**
**76863 Herxheim-Hayna (DE)**

• **Mundt, Ulrich**
**76863 Herxheim (DE)**

(74) Vertreter: **Grünecker Patent- und Rechtsanwälte PartG mbB**
**Leopoldstraße 4**
**80802 München (DE)**

(56) Entgegenhaltungen:
EP-A1- 1 516 761       EP-B- 1 511 651
DE-A1- 19 711 031      DE-B3- 10 317 512
DE-B3-102004 030 705   US-A1- 2005 085 968
US-A1- 2006 175 877

EP 2 082 919 B2

**Beschreibung**

Die Erfindung bezieht sich auf einen Kraftfahrzeugsitz mit Luftkanal, der wenigstens eine im oberen Bereich des Sitzes vorgesehene Luftausstromöffnung zum Versorgen des Kopf-, Schulter- oder Nackenbereiches eines Fahrzeuginsassen und eine elektrische Zusatzheizung für ein Kraftfahrzeug gemäß dem Oberbegriff des unabhängigen Anspruchs1. Insbesondere betrifft die Erfindung eine Zusatzheizung, die neben einem Heizelement auch eine Steuereinheit zur Einstellung der von dem Heizelement aufzubringenden Heizleistung aufweist.

Um den Komfort in einem Kraftfahrzeug zu erhöhen, werden bereits seit geraumer Zeit Heizungen eingesetzt. Bei diesen Heizungen wird die von einem Gebläse angesaugte bzw. ausgestoßene Luft durch die Abwärme des Motors oder unter Verwendung zusätzlicher Heizmodule erwärmt und in den Innenraum des Kraftfahrzeugs geblasen. Die Heizleistung solcher in Armaturen, Sitzen oder anderen Teilen des Fahrzeugs angebrachter Heizungen wird in der Regel manuell vom Benutzer bestimmt, jedoch hat der Benutzer nur geringen Einfluss auf die genaue Temperatur der ausströmenden Luft.

Da im allgemeinen lediglich die Heizleistung oder eine Heizleistungsstufe vorgegeben werden kann, ist das Erreichen einer gewünschten Raumtemperatur im Fahrzeuginneren teilweise ein schwierigeres Unterfangen. Zu Beginn des Heizens ist die Heizleistung z.B. aufgrund eines kalten Motors sehr gering. Deshalb wird vom Benutzer zunächst eine sehr hohe Heizleistung gewählt oder elektrische Zusatzheizungen verwendet. Erhöht sich jedoch die Temperatur des Motors, so ist die in den Innenraum geblasene Luft viel heißer als vom Fahrgast erwünscht, so dass dieser die Heizleistung der Zusatzheizung oder die gewählte Heizstufe reduziert. Meistens wird die Heizleistung jedoch so stark reduziert, dass die Temperatur im Fahrzeuginneren wieder zu stark absinkt, und die Heizleistung wieder erhöht werden muss.

Wie aus dem obigen Beispiel ersichtlich ist, kann das Erreichen einer angestrebten Innenraumtemperatur unter Umständen ein sehr zeitraubender Prozess sein. Dies wird zusätzlich noch dadurch verstärkt, dass die erwärmte Luft durch ein Gebläse in den Innenraum geblasen wird. Neben der gewählten Heizleistung wirkt sich auch die Stärke des Gebläses auf die Temperatur der in den Innenraum strömenden Luft aus. Da Benutzer die Stärke des Gebläses während der Fahrt oft variieren, kommt es durch die damit verbundene Veränderung der durch die Heizung strömenden Luftmenge zu weiteren Temperaturschwankungen. Dadurch wird das Erreichen einer Zieltemperatur zusätzlich erschwert.

Aus DE 103 17 512 ist eine Luftversorgungseinrichtung für ein Kraftfahrzeug bekannt, in der sich ein Temperatursensor zwischen einem im Luftkanal angeordnetem Heizelement und der Luftausströmöffnung befindet. Unter Berücksichtigung der vom Temperatursensor gemessenen Temperatur der ausströmenden Luft wird die Heizleistung in einfacher Weise variiert: ist die gemessene Temperatur zu hoch, so wird die Heizleistung verringert, ist sie zu niedrig, so wird die Heizleitung erhöht. Die in DE 103 17 512 beschriebene Regelung der Heizleistung führt jedoch zu Temperaturschwankungen in der ausströmenden Luft, insbesondere zu Überschwingern über die beabsichtigte Solltemperatur der ausströmenden Luft, die von den Fahrzeuginsassen als störend empfunden werden.

Ein weiterer Nachteil der in DE 103 17 512 beschriebenen Luftversorgungseinrichtung besteht darin, dass zum Messen der Temperatur der ausströmenden Luft ein separater Temperatursensor erforderlich ist. Ein solcher Temperatursensor verursacht zusätzliche Kosten bei der Herstellung und erhöht die Fehleranfälligkeit.

Weitere Beispiele für elektrische Heizungen finden sich in US 2005/085968, welches die Merkmale des Oberbegriffs des Anspruchs 1 enthält, sowie in US 2006/175877, DE 10 2004 030705 und EP-B-1 511 651.

Aufgabe der vorliegenden Erfindung ist es, eine elektrische Zusatzheizung mit einfacherer Temperatursteuerung und höherer Benutzerfreundlichkeit anzugeben.

Diese Aufgabe wird erfindungsgemäß durch die Merkmale des unabhängigen Anspruchs 1 gelöst. Vorteilhafte Ausführungsformen mit zweckmäßigen Weiterbildungen der Erfindung sind in den Unteransprüchen angegeben.

Es ist der besondere Ansatz der vorliegenden Erfindung, anstelle der Warmlufttemperatur die Temperatur der zuströmenden Kaltluft zu erfassen. Erfindungsgemäß weist die elektrische Zusatzheizung wenigstens ein PTC-Heizelement, welches die durch die Zusatzheizung strömende Luft erwärmt, und eine Steuereinheit, welche die vom Heizelement abgegebene Heizleistung einstellt, auf. Um die Heizleistung an die Temperatur der zu erwärmenden kalten Luft anzupassen, ermittelt eine Temperaturbestimmungseinheit diese Kaltlufttemperatur. Basierend auf der ermittelten Kaltlufttemperatur und einer Soll-Warmlufttemperatur der aus der Heizung strömenden Luft bestimmt die Steuereinheit die vom Heizelement zu erbringende Heizleistung.

Durch die Ermittlung der Temperatur der anströmenden zu erwärmenden Luft, im folgenden als "Kaltlufttemperatur" bezeichnet, kann die aufzubringende Heizleistung exakt an die Eigenschaften der anströmenden Luft angepasst werden. Auf diese Weise können drohende Temperaturschwankungen bei dynamischen Betriebszuständen besser erkannt und rechtzeitig durch Anpassung der Heizleistung kompensiert werden. Ist z.B. die zu erwärmende Luft sehr kalt, so ist zu deren Erwärmung eine höhere Heizleistung notwendig, während eine höhere Lufttemperatur eine geringer Heizleistung zur Erwärmung benötigt. Da die Temperatur der aus der Zusatzheizung strömenden Luft von der Kaltlufttemperatur und der Heizleistung abhängt, lässt sich diese Temperatur sehr viel besser kontrollieren, so dass Schwankungen in der Ausgangstemperatur vermieden werden können.

Vorzugsweise bestimmt die Temperaturbestimmungseinheit die Kaltlufttemperatur unter Verwendung wenigstens eines gemessenen Temperaturwerts. Dabei kann zusätzlich vorzugsweise mindestens ein Korrekturfaktor verwendet werden. Durch die Verwendung eines Korrekturfaktors ist es nicht nötig, die Temperatur der zu erwärmenden Luft mittels eines im Luftkanal vor dem Heizelement angebrachten Sensors zu messen. Vielmehr lässt sich diese Temperatur aus Temperaturwerten bestimmen, die von anderen Bauteilen eines Fahrzeugs, wie z.B. der Klimaanlage, zur Verfügung gestellt werden. So kann im Umwälzmodus der Lüftung/Heizung die Temperatur der angesaugten Luft leicht aus der Innenraumtemperatur des Fahrzeugs bestimmt werden, während im Durchlaufbetrieb, bei dem frische Außenluft in das Fahrzeug strömt, die Außentemperatur am Fahrzeug ein guter Wert für die Kaltlufttemperatur darstellt.

Um die Kaltlufttemperatur aus einem im Fahrzeug an anderer Stelle erfassten Temperaturwert zu bestimmen, werden vorzugsweise Korrekturfaktoren, die den Temperaturunterschied zwischen der gemessenen Temperatur und der tatsächlichen Kaltlufttemperatur ausgleichen, verwendet. Oft ist dieser Temperaturunterschied während des Betriebs des Fahrzeugs nicht konstant. Um dieser zeitlichen Variation Rechnung zu tragen, verwendet die Temperaturbestimmungseinheit in einer weiter vorteilhaften Ausführungsform Korrekturfaktoren, welche die zeitliche Variation der Kaltlufttemperatur gegenüber dem gemessenen Temperaturwert korrigieren.

Da bei einem Fahrzeug mit offenen Verdeck bzw. geöffneten Fenstern sich die Außentemperatur maßgebend auf die Kaltlufttemperatur der zu erwärmenden Luft auswirkt, erfolgt die Ermittlung der Kaltlufttemperatur erfindungsgemäß aus eine gewichteten Kombination einer Fahrzeuginnenraum- und der Fahrzeugaußenraumtemperatur.

Alternativ verwendet die Temperaturbestimmungseinheit der vorliegenden Erfindung einen im Luftansaugtrakt zwischen einem Gebläse und dem Heizelement angeordneten Temperatursensor zum Messen der Kaltlufttemperatur. Da die Kaltlufttemperatur oft nicht direkt vor dem Heizelement gemessen wird, kann sich die Kaltlufttemperatur nach der Temperaturmessung unter Umständen geringfügig ändern bevor die Luft erwärmt wird. Deshalb wird vorzugsweise zusätzlich ein Korrekturfaktor verwendet, der Abweichungen vom gemessenen Wert berücksichtigt.

Um die Heizleistung an die Wünsche des Nutzers optimal anzupassen, ist die Soll-Warmlufttemperatur vorzugsweise vom Nutzer frei wählbar. Die Wahl der Heizleistung kann dabei in Stufen oder kontinuierlich erfolgen. Vorzugsweise ist der Wert der Soll-Warmlufttemperatur davon abhängig, ob das Fahrzeug geschlossen oder offen bewegt wird. So lässt sich die Soll-Warmlufttemperatur in einfacher Weise an dynamische Fahreinflüsse, die durch ein offenes Verdeck oder ein offenes Fenster verursacht werden, anpassen. Vorzugsweise wird die Soll-Warmlufttemperatur zusätzlich in Abhängigkeit von der Außentemperatur eingestellt, da diese bei offenem Verdeck die Temperatur im inneren des Fahrzeugs maßgeblich beeinflusst. Dies ist vor allem bei der Verwendung der Zusatzheizung im Nackenbereich eines Fahrzeuginsassen von Vorteil. Um die Einflüsse des Fahrtwindes, z.B. durch Verwirbelungen, zusätzlich zu berücksichtigen, stellt die Steuereinheit die Soll-Warmlufttemperatur vorzugsweise in Abhängigkeit von der Fahrzeuggeschwindigkeit ein. Dabei steigt vorzugsweise die Soll-Warmlufttemperatur kontinuierlich oder stufenweise bei wachsender Fahrzeuggeschwindigkeit, während sie bei abnehmender Fahrzeuggeschwindigkeit wieder reduziert wird.

Neben der Kaltlufttemperatur und der Soll-Warmlufttemperatur hat auch der Luftmassenstrom, also der Luftdurchsatz durch das Heizelement, Einfluss auf die zu erbringende Heizleistung. Insbesondere benötigt ein höherer Luftmassenstrom eine größere Heizleistung, um auf eine vorgegebene Solltemperatur aufgeheizt zu werden. Um diesem Sachverhalt Rechnung zu tragen, berücksichtigt die Steuereinheit zur Einstellung der zu erbringenden Heizleistung vorzugsweise zusätzlich den durch das Heizelement strömenden Luftmassenstrom. Die Wahl des Luftmassenstroms kann dabei in Stufen oder kontinuierlich erfolgen. Vorzugsweise wird der Wert des Luftmassenstroms automatisch eingestellt je nachdem, ob das Fahrzeug geschlossen oder offen verwendet wird. So lässt sich der Luftmassenstrom in einfacher Weise an Einflüsse eines offenen Verdecks oder Fensters anpassen. Dies ist vor allem bei der Verwendung der Zusatzheizung im Nackenbereich eines Fahrzeuginsassen von Vorteil.

Bei Fahrten mit offenem Verdeck erzeugt der Fahrtwind Verwirbelungen im Fahrzeuginneren, die ein Fahrzeuginsasse im Allgemeinen durch Erhöhung der Gebläseleistung kompensiert. Wird das Fahrzeug jedoch abrupt gestoppt, so ist die ausgewählte Gebläseleistung zu hoch, so dass es beim Fahrzeuginsassen zu einem unangenehmen und ungewollten Übertemperierungseffekt kommen kann. Um dies zu vermeiden, wird basierend auf einem Signal, das auf den Stillstand des Fahrzeugs hinweist, der Luftmassenstrom vorzugsweise auf einen vorwählbaren Wert eingestellt.

Um zusätzlich die Einflüsse des Fahrtwindes auch während der Fahrt zu berücksichtigen, stellt die Steuereinheit den Luftmassenstrom vorzugsweise in Abhängigkeit von der Fahrzeuggeschwindigkeit ein. Vorzugsweise erhöht sich der Luftmassenstrom bei wachsender Fahrzeuggeschwindigkeit, während er bei sinkender Fahrzeuggeschwindigkeit wieder reduziert wird.

Ändert sich während des Betriebs der Zusatzheizung die Soll-Warmlufttemperatur und/oder der Luftmassenstrom, so ist eine Anpassung der zu erbringenden Heizleistung nötig. Aufgrund der Trägheit der PTC-Heizelemente wird, z.B. bei einer Erhöhung der Soll-Warmlufttemperatur, die zur Erwärmung der auf den neuen gewünschten Temperatursollwert der ausströmenden Luft ermittelte Heizleistung nicht sofort in vollem Umfang an die zu erwärmende Luft abgegeben. Um diesen Trägheitseffekt auszugleichen, überkompensiert (erhöht bzw. erniedrigt) die Steuereinheit vorzugsweise die zu erbringende Heizleistung bei Änderung der Soll-Warmlufttemperatur und/oder des Luftmassenstroms für eine vorgegebene Zeitspanne nach dem Zeitpunkt der Änderung, d.h. für die Heizleistung wird je nach Änderung der Soll-Warmlufttemperatur/des Luftstroms während der vorgegebenen Zeitspanne ein Wert gewählt, der höher bzw. niedriger ist als der Wert, der für die Soll-Warmlufttemperatur/den Luftstrom eigentlich vorgesehen ist. Die Überkompensation der Heizleistungsänderung wird vorzugsweise über eine vorgegebene (oder beispielsweise von der Änderungshöhe abhängigen) Zeitspanne durchgeführt. Dabei kann die Höhe der Überkompensation zum Ende der Zeitspanne hin abnehmen, um einen kontinuierlichen Übergang zu erreichen.

Um unerwünschte Folgen einer Blockade des Luftauslasses bzw. -Einlasses oder bei Ausfall des die Heizung mit Luft versorgenden Gebläses zu verhindern, berücksichtigt die Steuereinheit vorzugsweise die am Gebläse anliegende Spannung. Ein Absinken der am Gebläse anliegenden Spannung ist ein deutliches Indiz für eine Blockade des Luftauslasses bzw. -Einlasses. Deshalb reduziert die Steuereinheit den durch die Zusatzheizung strömenden Luftmassenstrom, falls die Spannung einen Grenzwert unterschreitet.

In ähnlicher Weise zeigt der über das Heizelement gemessene Strom ein Problem im Luftstrom an, da bei einem gestörten Luftstrom der Stromwert absinkt (PTC-Effekt). Deshalb schaltet die Steuereinheit vorzugsweise das Heizelement ab, falls der über das Heizelement gemessene Strom eine vorgegebene Grenze unterschreitet.

Da die zur Bestimmung der aufzubringenden Heizleistung nötigen Parameter, wie die Heizeigenschaften des Heizelements oder die Einflüsse Fahrzeugs, oft nicht theoretisch bekannt sind, verwendet die Zusatzheizung vorzugsweise ein Kennfeld, das die Eigenschaften dieser Parameter beschreibt. Dabei kann die Steuerung der Zusatzheizung durch Kombination mathematischer Formeln und des Kennfeldes erfolgen. Auch kann die Steuereinheit die Einstellung der Heizleistung vollständig mittels Kennfelder durchführen.

Um den Aufwand zur Verkabelung der Zusatzheizung mit anderen Bauteilen eines Fahrzeugs zu verringen, werden die von den Bauteilen gelieferten Signale vorzugsweise über ein Bussystem im Kraftfahrzeug zur Verfügung gestellt.

Mit der vorliegenden Erfindung ist eine elektrische Zusatzheizung im Kraftfahrzeug in einfacher Weise überall als autark operierende Zusatzheizung einsetzbar. Sie eignet sich daher besonders gut zur dezentraten Beheizung und kann an beliebigen Einsatzorten montiert werden, beispielsweise in Fahrzeugsitzen, im Fondbereich, im Fußraum, oder in den B- oder C-Säulen eines Kraftfahrzeugs. Vor allem die genaue Bestimmung der aufzubringenden Heizleistung ermöglicht es, die Zusatzheizung in direkter Nähe der Fahrzeuginsassen einzusetzen. Vorzugsweise ist deshalb die Zusatzheizung in einem Fahrzeugsitz vorgesehen, der den Sitz-, Rücken- oder Nackenbereich eines. Insassen mit warmer Luft versorgt.

Weitere Vorteile, Merkmale und Einzelheiten der Erfindung erben sich aus der nachfolgenden Beschreibung bevorzugter Ausführungsbeispiele sowie anhand der Figuren; diese zeigen in:

Fig. 1  einen schematischen Aufbau der elektrischen Zusatzheizung gemäß der vorliegenden Erfindung,

Fig. 2  ein Ablaufdiagramm, welches das Prinzip der Steuerung der elektrischen Zusatzheizung gemäß der Erfindung darstellt,

Fig. 3  einen Aufbau der elektrischen Zusatzheizung gemäß der vorliegenden Erfindung mit integriertem Gebläse,

Fig. 4  einen Fahrzeugsitz mit eingebauter Zusatzheizung und

Fig. 5  einen zeitlichen Verlauf der Heizleistungsaufnahme der erfindungsgemäßen Zusatzheizung bei einem Lastwechsel.

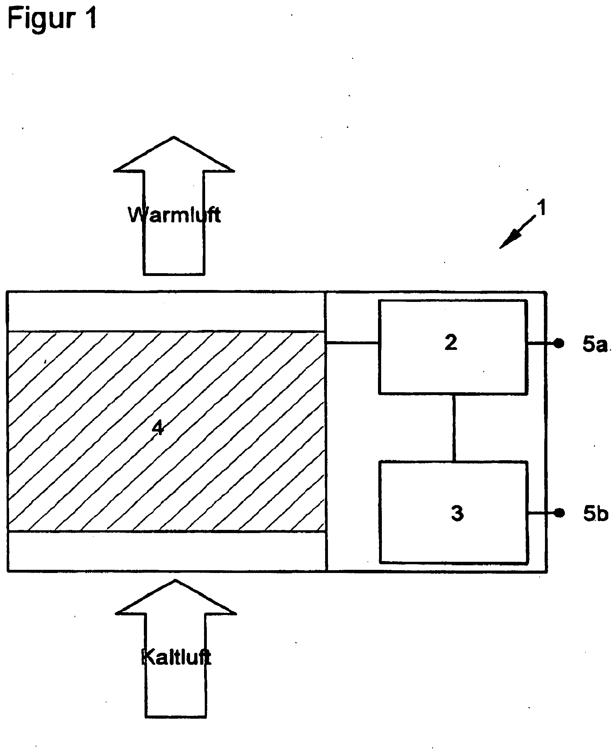

Fig. 1 zeigt den schematischen Aufbau einer elektrischen Zusatzheizung gemäß der vorliegenden Erfindung. Die Zusatzheizung 1 umfasst eine Steuereinheit 2, eine Temperaturbestimmungseinheit 3 und einen Heizabschnitt 3 aus einem oder einer Mehrzahl von PTC-Heizelementen und aus Radiatorelementen zur Abgabe der Heizleistung an die durch die Radiatorelemente strömende Luft. Die Temperaturbestimmungseinheit 3 ist mit der Steuereinheit 2 verbunden und liefert an diese einen Temperaturwert, der die Temperatur der das Heizelement 4 anströmenden Kaltluft widerspiegelt. Basierend auf dem erhaltenden Temperaturwert steuert die Steuereinheit 2 die Heizleistung des PTC-Heizelements.

Um die Zusatzheizung 1 mit anderen Komponenten in einem Fahrzeug zu verbinden, weist die Zusatzheizung 1 Anschlüsse 5a und 5b auf. So kann z.B. die Temperaturbestimmungseinheit 3 mittels Anschluss 5b mit einem im oder am Fahrzeug befindlichen Temperatursensor verbunden werden. Auch ist es möglich, das Verhalten der Steuereinheit über Anschluss 5a zu beeinflussen. So können über diesen Anschluss beispielsweise benutzerdefinierte Vorgaben oder Signale anderer Fahrzeugkomponenten an die Steuereinheit 2 weitergegeben werden.

Die Verbindung der Zusatzheizung 1 mit externen Geräten des Fahrzeugs kann dabei direkt in analoger oder digitaler Weise erfolgen. In diesem Fall ist jedoch ein hoher Kabelaufwand nötig, da jedes externe Gerät einzeln mit der Zusatzheizung 1 verbunden werden muss. Um diese Problem zu umgehen, wird in Fahrzeugen vermehrt ein Bus, z.B.

CAN- oder LIN-Bus, eingesetzt. Auf dem Bus werden die Signale einer Vielzahl von Geräten an andere Geräte des Fahrzeugs mittels einer einzigen Leitung weitergegeben. Durch die Anschlüsse 5a und 5b kann die Zusatzheizung 1 in einfacher Weise mit einem solchen Datenbus verbunden werden und die über den Bus erhaltenen Signale weiterverarbeiten. So kann beispielsweise die Temperaturbestimmungseinheit 3 einen Temperaturwert einer im Fahrzeug befindlichen Klimaanlage oder eines im Luftkanal angebrachten Sensors über den Bus erhalten und die Kaltlufttemperatur der das Heizelement 4 anströmenden Luft ermitteln.

Auch ist es möglich über die Anschlüsse 5a und 5b die Steuereinheit 2 bzw. die Temperaturbestimmungseinheit 3 zu aktualisieren oder zu warten. Jedoch ist dem Fachmann klar, dass die oben beschriebene Verwendung der Anschlüsse lediglich Beispiele sind und die Anschlüsse eine Vielzahl von Möglichkeiten zur Einflussnahme auf die Zusatzheizung bieten. Auch ist es nicht nötig die Zusatzheizung mit zwei separaten Anschlüsse auszustatten. So kann die Zusatzheizung lediglich einen mit der Steuereinheit 2 verbunden Anschluss 5a aufweisen über den die Steuereinheit 2 Daten erhält. Die von der Temperaturbestimmungseinheit 3 benötigten Daten werden in diesem Fall - falls erforderlich - von der Steuereinheit 2 an die Temperaturbestimmungseinheit 3 weitergeleitet.

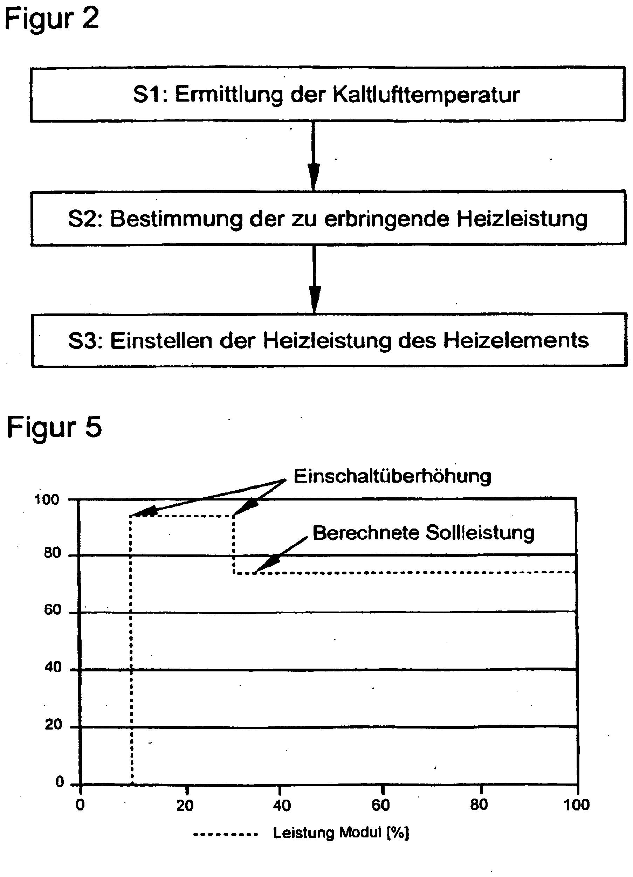

Figur 2 zeigt ein Ablaufdiagramm, welches das Grundprinzip der Steuerung der Zusatzheizung 1 verdeutlicht. Im ersten Schritt S1 wird die Kaltlufttemperatur der zu erwärmenden Luft ermittelt. Diese Ermittlung kann auf verschiedene Art erfolgen. Am einfachsten lässt sich diese Temperatur durch einen Sensor bestimmen, der in der einströmenden Kaltluft, bei Verwendung eines Gebläses vorzugsweise im Luftkanal zwischen dem Gebläse und dem Heizelement, angeordnet ist. Diese Vorgehensweise hat den Vorteil, dass sich durch einen solchen Sensor die Kaltlufttemperatur genau bestimmen lässt. Jedoch ist in diesem Fall ein zusätzlicher Sensor nötig, wodurch die Kosten einer Zusatzheizung steigen.

Vorzugsweise wird die Kaltlufttemperatur daher basierend auf bereits im Fahrzeug erfassten Temperaturwerten bestimmt, z.B. der Innenraumtemperatur des Fahrzeugs, einer von einer Klimaanlage gemessenen Temperatur oder dergleichen. In diesem Fall sind zur Ermittlung der Kaltlufttemperatur keine zusätzlichen Temperatursensoren nötig, sondern es können ohne Zusatzkosten die bereits im Fahrzeug integrierten Geräte verwendet werden. Details einer solchen "indirekten" Erfassung der Kaltlufttemperatur werden in einem nachfolgenden Abschnitt im einzelnen dargestellt.

Basierend auf der so ermittelten Kaltlufttemperatur wird in Schritt S2 die vom Heizelement 4 aufzubringende Heizleistung bestimmt. Diese Heizleistung ist maßgeblich von der Temperatur der das Heizelement anströmenden Luft abhängig. So ist beispielsweise zur Erwärmung kalter Luft eine größere Heizleistung nötig als die Erwärmung wärmerer Luft auf die gleiche Temperatur erfordert.

Die benötigte Heizleistung lässt sich auf mehrere Arten ermitteln. Dies kann beispielsweise mit Hilfe von Algorithmen (also durch Lösen mathematischer Gleichungen) erfolgen, welche die Abhängigkeit der Heizleistung von der Kaltlufttemperatur beschreiben. Auch ist es möglich eine Kennlinie, welche die Abhängigkeit der Heizleistung von der Kaltlufttemperatur und anderen Parametern widerspiegelt, zu verwenden. In diesem Fall lässt sich der Rechenaufwand zur Bestimmung der Heizleistung vermeiden. Jedoch ist es dem Fachmann klar, dass es noch andere Möglichkeiten zur Ermittlung der erforderlichen Heizleistung gibt und die oben erwähnten Verfahren lediglich Beispiele sind.

Nach Ermittlung der aufzuwendenden Heizleistung wird im Schritt S3 die Heizleistung des Heizelements 4 eingestellt. Dies kann beispielsweise in einfacher Weise durch eine geeignete Wahl der durch das Heizelement (oder durch eine Mehrzahl von vorzugsweise separat ansteuerbaren PTC-Heizelementen) fließenden Stromstärke erreicht werden. Dazu werden im allgemeinen je nach Anzahl der separat ansteuerbaren Heizstufen der Zusatzheizung Leistungshalbleiter verwendet, die den jeder Heizstufe zuzuführenden Strom einstellen.

Mit der erfindungsgemäßen Ansteuerung wird die von Heizelement 4 an die zu erwärmende Luft abgegebene Heizleitung an die Kaltlufttemperatur der einströmenden Luft angepasst. Im Gegensatz zum Stand der Technik kann die Heizleistung ohne nachteilige Regelungsüberschwinger auch bei sich dynamisch ändernden Umgebungsbedingungen optimal angepasst werden. Unangenehme Überhitzungen des erwärmten Luftstroms können somit sicher vermieden werden.

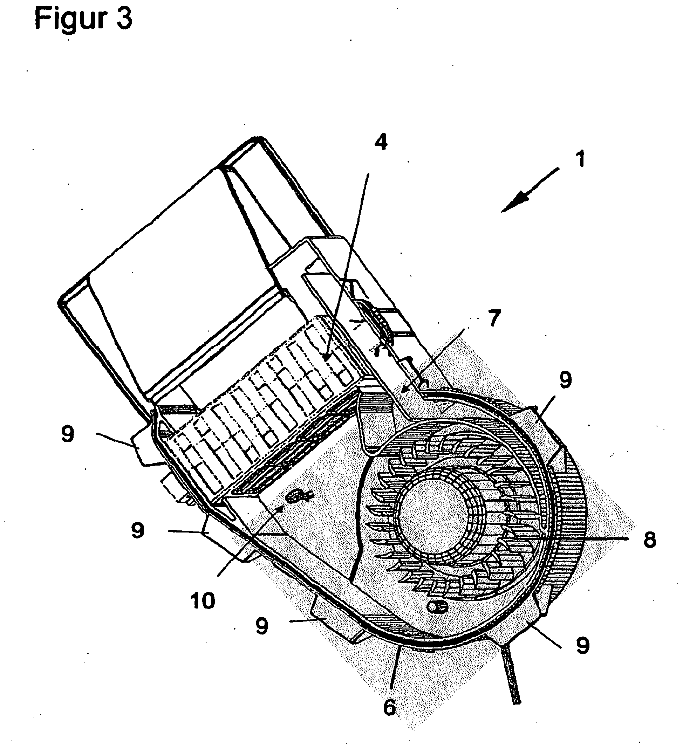

In Figur 3 ist eine elektrische Zusatzheizung gemäß der vorliegenden Erfindung mit zusätzlichem Gebläse näher dargestellt, welches - gemäß einer Ausführungsform der Erfindung - einen Temperatursensor zur Messung der Kaltlufttemperatur aufweist. Wie zuvor beschrieben ist der Einsatz eines solchen Temperatursensors jedoch nicht unbedingt erforderlich,

Die Zusatzheizung 1 besteht aus einem aus einem flachen Kasten 6 in dem nebeneinander ein Heizelement 3, eine Platine mit einer elektronischen Steuerung 7, in der die Steuereinheit 2 und die Temperaturbestimmungseinheit 5 integriert sind, ein Radialgebläse 8 und ein Temperatursensor 10 angeordnet sind. Am Außenumfang des Kastens 6 ist zusätzlich eine Anzahl von Befestigungslaschen 9 vorgesehen, die dazu dienen, den Kasten 6 mit entsprechenden Gegenstücken im Stützkörper des Fahrzeugs zu verbinden. Der Temperatursensor 10 ist im Kaltlufttrakt vorgesehen und mit der elektronischen Steuerung 7 verbunden. Die elektronische Steuerung 7 ist weiterhin über nicht näher dargestellte Leitungen mit dem Kraftfahrzeugbordnetz, dem Radialgebläse 8, oder entsprechenden vorzugsweise im Sitz- oder Armaturenbereich angebrachten Steuerelementen verbunden. Über diese Steuerelemente lassen sich beispielsweise die Warmlufttemperatur und/oder die Gebläsedrehzahl unabhängig voneinander einstellen. Außerdem kann die Steuerung 7 zusätzlich oder anstelle des Temperatursensors 10 mit einem Kraftfahrzeugbus verbunden sein, welcher der Steuerung 7 im Fahrzeug vorhandene Umgebungsparameter wie beispielsweise die Innentemperatur, die Außentemperatur, die Fahrzeuggeschwindigkeit, den Verdeckzustand (offen/geschlossen) etc. bereitstellt.

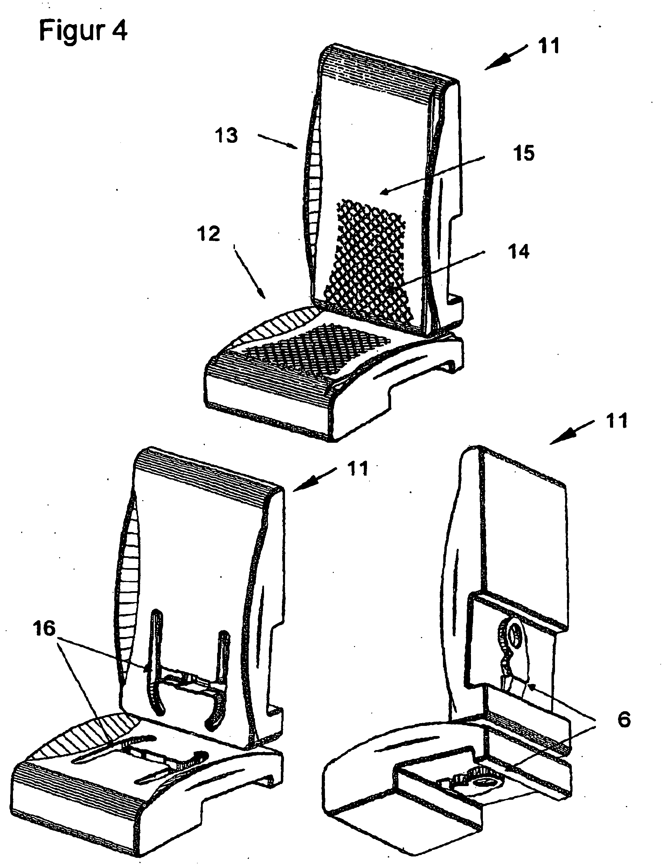

Figur 3 verdeutlicht in anschaulicher Weise die vielen Einsatzmöglichkeiten der vorliegenden Erfindung. Zusatzheizungen wie in Figur 4 dargestellt werden an zahlreichen Stellen im Fahrzeug eingesetzt. So werden Zusatzheizungen im Armaturenbrett oder im Sitz-, Rücken- und Nackenbereich von Fahrzeugsitzen eingebaut. Auch enthalten heutige Fahrzeuge zur Komfortsteigerung mehrere Gebläse- oder Heizmodule. Da die vorliegenden Erfindung die Temperatur der anströmenden Luft für jedes einzelne der im Fahrzeug integrierten Heizelemente jeweils individuell ermittelt, kann jedes Heizelement autark operieren und somit dezentral eingesetzt werden.

Eine mögliche Ausführungsform der Verwendung der Zusatzheizung gemäß der vorliegenden Erfindung zur Beheizung eines Kraftfahrzeugsitzes ist in Figur 4 dargstellt. Der Kraftfahrzeugsitz 11 weist in üblicher Form ein Sitzpolsterteil 12 und eine Rückenlehne 13 auf. Sowohl das Sitzpolsterteil 12, als auch die Rückenlehne 13 bestehen im wesentlichen aus einem Stützkörper besonders vorteilhaft aus Hartschaumstoff, beispielsweise Polyurethan, aber auch als Federkernsitz, in dem die erforderlichen Befestigungsschienen und -rahmen integriert sind. Auf die Oberfläche des Hartschaumstoffs ist beispielsweise ein Gewirke 14 aufgeklebt auf dem der äußere Bezug 15, beispielsweise Velours oder Leder, liegt.

In den Hartschaumstoff sind im in Fig. 4 dargestellten Beispiel Luftströmungskanäle 16 vorgesehen, die in einer Kammer münden und auf ihren gesamten Längen zu dem Gewirke 14 hin offen sind. Auf der Rückseite des Sitzpolsterteils 12 bzw. der Rückenlehne 13 sind Zusatzheizungen 6 in dafür vorgesehen Öffnungen platziert. Durch die Luftkanäle 16 wird die von den Zusatzheizungen erwärmte Luft an die Fahrzeuginsassen weitergeleitet. Auch wenn in Figur 4 lediglich Heizungen für die Sitz- und Rückenteile des Sitzes abgebildet sind, so kann die Zusatzheizung der vorliegenden Erfindung in gleicher Weise in Sitzen verwendet werden, die einen Luftkanal (oder auch mehrere) zum Erwärmen des Nackenbereiches des Fahrzeuginsassen aufweisen. In diesem Fall können beispielsweise nicht nur eine, sondern auch drei Zusatzheizungen zum Einsatz kommen, die jeweils den Sitz-, Rücken- oder Nackenbereich des Sitzinsassen mit warmer Luft versorgen.

Beim Einsatz mehrere Zusatzheizungen in einem Fahrzeug ist es jedoch nicht nötig jedes einzelne Heizelement 4 mit einer elektronischen Steuerung 7 zu versehen. Zur Reduzierung der Kosten kann das Fahrzeug mit nur einer einzigen elektronischen Steuerung versehen werden, welche mit den einzelnen Heizelementen, z.B. über einen Bus oder analog, verbunden ist und die vom jeweiligen Heizelement aufzubringende Heizleistung individuell einstellt.

Auch ist es nicht nötig, dass jedes einzelne Heizelement mit einem separaten Gebläse 8 verbunden ist. Zur Reduzierung der Kosten und des Fahrzeuggewichts, können mehrere Heizelemente mit einem einzigen Gebläse 8 verbunden sein, welches die einzelnen Heizelemente mit Luft versorgt. Die erfindungsgemäße Zusatzheizung kann beispielsweise in Luftkanälen angeordnet werden, die Luft von einem zentralen Gebläse an weiter hinten im Fahrzeug angeordnete Ausströmer führen. Ein individuelles Gebläse ist in solchen Fällen nicht erforderlich. Auch kann beispielsweise ein Fahrzeugsitz lediglich einen oder mehrere Luftkanäle aufweisen, die mit einem externen Gebläse verbunden sind und in denen eine oder mehrere Zusatzheizungen gemäß der vorliegenden Erfindung vorgesehen sind. Die Parameter des der Heizung zugeführten Kaltluftstroms können beispielsweise vom zentralen Klimasystem bereitgestellt werden.

Wie bereits zuvor erwähnt ist die aufzuwendende Heizleistung maßgeblich von der Kaltlufttemperatur der das Heizelement 4 anströmenden Luft abhängig. Die aufzuwendende Heizleistung lässt sich dabei mittels unterschiedlicher Verfahren bestimmen, beispielsweise mittels mathematischer Gleichungen, welche die Kaltlufttemperatur als Steuergröße enthalten. Dieser mathematische Rechenaufwand lässt sich bei Verwendung von Kennlinien bzw. Kennfeldern vermeiden. Bei dieser Methode zur Heizleistungsbestimmung werden beispielsweise experimentell durch Messungen an der Zusatzheizung Kennlinien bestimmt, welche die Abhängigkeit der Heizleistung von der Kaltlufttemperatur wiedergeben, und die im Betrieb eine jeweils optimale Heizleistungseinstellung ermöglichen.

Beide Bestimmungsmethoden können zur Verbesserung der Temperaturbestimmung auch miteinander kombiniert werden. So lassen sich beispielsweise Teilaspekte der mathematischen Berechnung, wie beispielsweise die Temperaturabhängigkeit von Parametern, leicht durch Kennfelder darstellen. Dadurch lässt sich der Berechnungsaufwand deutlich vereinfachen, da oft keine genauen Formeln für die Eigenschaften der Parameter existieren. Zusätzlich hat die Verwendung von Kennlinien den Vorteil, dass diese bei Bedarf aktualisierbar sind. So kann z.B. durch Neubestimmung der Kennlinien die Ermittlung der Kaltlufttemperatur bei verbesserten Messverfahren optimiert werden. Zusätzlich lässt sich damit die Steuerung der Heizleistung auf sich ändernde Eigenschaften der Zusatzheizung, z.B. deren eventuelle Verschmutzung, anpassen.

Um die oben beschriebenen Funktionen auszuführen, kann beispielsweise in der Steuereinheit 2 und/oder der Temperaturbestimmungseinheit 3 eine Speichereinheit enthalten sein (nicht dargestellt), die Steuerprogramme, Funktionsroutinen oder Kennlinien enthält, welche die Temperaturbestimmung und die Steuerung des Heizelements definieren. Zusätzlich ist in diesem Fall vorzugsweise in einer oder beiden Einheiten ein Prozessor vorgesehen, der die in der Speichereinheit gespeicherten Programme ausführt. Auch können die in den Speichereinheiten gespeicherten Daten leicht mittels der Anschlüsse 5a und 5b aktualisieren. Jedoch ist es dem Fachmann klar, dass zur Ausführung der Funktionen der Zusatzheizung auch andere Realisierungen möglich sind.

Im folgenden wird zunächst die mathematische Methode zur Berechnung der aufzubringenden Heizleistung vorgestellt. Grundlage für dieses Verfahren bildet die Formel:

$$P = \dot{m} \cdot c_P \cdot \Delta T \qquad \qquad \text{(i)}$$

wobei $P$ die abzugebende Heizleistung, $m$ den durch die Zusatzheizung 1 strömenden Luftmassenstrom, $c_P$ die Wärmekapazität der Luft und $\Delta T := T_{Auslass} \cdot T_{Kalt}$ die Differenz zwischen der Soll-Warmlufttemperatur $T_{Auslass}$, d.h. der erwünschten Temperatur der ausströmenden warmen Luft, und der Kaltlufttemperatur $T_{Kalt}$ darstellt.

In der einfachsten Ausführung der Zusatzheizung sind die Soll-Warmlufttemperatur und die Luftmassenstrom fest vorgegeben, so dass die zu erbringende Heizleistung nur von der möglicherweise variablen Kaltlufttemperatur abhängt. Um die Effizienz der Aufnahme der Heizenergie von der durchströmenden Luft zu berücksichtigen, kann zusätzlich noch ein Effizienzfaktor $\alpha$ berücksichtigt werden. In diesem Fall lautet die Formel zur Berechnung der Heizleistung

$$P = \alpha \cdot \dot{m} \cdot c_P \cdot \Delta T \,. \qquad \qquad \text{(ii)}$$

Die zur Berechnung der Heizleistung benötigte Kaltlufttemperatur kann auf mehrere Arten bestimmt werden. Am einfachsten lässt sich dies mittels eines Temperatursensors zwischen Gebläse und Heizelement realisieren, der die Temperatur der das Heizelement anströmenden Luft misst. Jedoch ist der Einsatz eines solchen Sensors nicht nötig, da eine Vielzahl von im Fahrzeug eingebauten Geräten Temperaturen im oder am Fahrzeug messen, die zur Bestimmung der Kaltlufttemperatur verwendet werden können. So misst z.B. eine im Fahrzeug eingebaute Klimaanlage eine Temperatur, die Rückschlüsse auf die Temperatur im inneren des Fahrzeugs erlaubt. Saugt das Gebläse, das die Zusatzheizung mit Luft versorgt, z.B. bei Umlaufbetrieb, die Luft aus dem Innenraum des Fahrzeugs an, so bildet die von der Klimaanlage gemessene Temperatur einen guten Wert für die Kaltlufttemperatur. Wird die Luftversorgung in Durchlauf betrieben, so wird die Luft nicht aus dem Fahrzeug sondern frische Luft von Außen angesaugt. In diesem Fall ist die von einem am Fahrzeug angebrachten Temperatursensor gemessene Außentemperatur ein gutes Maß für die Kaltlufttemperatur. Ausgehend von dieser Beobachtung verwendet die vorliegende Erfindung eine von einem im oder am Fahrzeug befindlichen Temperatursensor gemessene Umgebungstemperatur $T_{Umgebung}$ zur Ermittlung der Kaltlufttemperatur.

Da die Umgebungstemperatur (im oder am Fahrzeug) meistens nicht genau mit der Kaltlufttemperatur (Ansaugtemperatur) übereinstimmt, kann zusätzlich ein Faktor $F$ in die Berechnung eingebracht werden, der die Güte einer, z.B. auf einem Bus liegenden, Temperatur (z.B. Innen- oder Außentemperatur) bewertet. Beispielsweise kann, falls keine Anpassung der auf dem Bus liegenden Temperatur nötig ist, $F = 1$ gewählt werden. Mittels des Gütefaktors, der beispielsweise Temperaturunterschiede zwischen der gemessenen Temperatur und der tatsächlichen Temperatur der Kaltluft wiedergibt, wird die Umgebungstemperatur korrigiert um die Kaltlufttemperatur zu erhalten:

$$T_{Kalt} = F \cdot T_{Umgebung} \,. \qquad \qquad \text{(iii)}$$

In Formel (iii) wird davon ausgegangen, dass sich das Verhältnis zwischen der Umgebungstemperatur und der Kaltlufttemperatur über einen Faktor bestimmen lässt. Jedoch ist eine solche eindeutige Abhängigkeit nicht immer gegeben. Daneben ist es auch möglich, dass sich die Kaltlufttemperatur von der Umgebungstemperatur immer um einen gewissen Differenzwert unterscheidet. Um eine solche Beziehung zwischen der Umgebungs- und er Kaltlufttemperatur zu berücksichtigen, verwendet die vorliegenden Erfindung alternativ einen additiven Korrekturfaktor $f$ wie es in folgender Formel dargestellt ist:

$$T_{Kalt} = T_{Umgebung} + f \,. \qquad \qquad \text{(iv)}$$

Um zusätzlich die zeitliche Variation der Abweichung der Umgebungstemperatur von der Kaltlufttemperatur zu berücksichtigen, können die Korrekturfaktoren auch zeitabhängig sein. Eine solche Zeitabhängigkeit tritt zum Beispiel auf, falls die Umgebungstemperatur z.B. am Armaturenbrett oder an der Mittelkonsole gemessen wird, die sehr schnell auf eine bestimmte Temperatur erwärmt werden, während die Luft beispielsweise in der Bodennähe des Innenraums angesaugt wird und sich erst langsam auf die Temperatur der Konsole erwärmt. Auch kann die Kaltlufttemperatur durch Kombination der Korrekturfaktoren $F$ und $f$ wie folgt bestimmt werden:

$$T_{Kalt} = F(t) \cdot T_{Umgebung} + f(t). \qquad \text{(v)}$$

Bisher wurde die Kaltlufttemperatur lediglich aus einer im oder am Fahrzeug gemessenen Temperatur bestimmt. Jedoch kann die Ermittlung der Kaltlufttemperatur durch Verwendung mehrerer Temperaturen verbessert werden.

Zur Bestimmung der Kaltlufttemperatur aus mehreren Temperaturwerten werden Gewichtungsfaktoren bzw. Korrelationsfaktoren verwendet, die den Einfluss der einzelnen Temperaturen auf die Kaltlufttemperatur ausdrücken. Vorzugsweise ergibt die Summe der Faktoren 1. Dabei können diese Korrelationsfaktoren sowohl zeitlich konstant als auch zeitlich veränderlich sein. Dies ermöglicht eine Bewertung der Güte der vom Fahrzeug bereitgestellten Werte.

Eine Korrelation/Gewichtung mehrerer Temperaturwerte wird im folgenden beispielhaft anhand einer Kombination zwischen einer gemessenen Innenraum- und der Außentemperatur dargestellt.

Beim Start eines Fahrzeuges und/oder beim Anschalten eines Heizmoduls findet in der Regel ein Abgleich zwischen Innen- und Außentemperatur statt. Herrscht z. B. im Fahrzeug bei geschlossenem Verdeck oder bei geschlossenen Fenstern eine Innenraumtemperatur von 18 °C, während die Außentemperatur 10 °C beträgt, so erfolgt bei Öffnen des Verdecks oder eines Fensters eine Angleichung der Temperaturen auf einen Wert zwischen den beiden Temperaturen, welcher zu bewerten ist.

Die Temperatur der zu erwärmenden Luft lässt sich durch folgende Formel bestimmen:

$$T_{Kalt} = F_{Außen}(t) \cdot T_{Außen} + F_{Innen}(t) \cdot T_{Innen}. \qquad \text{(vi)}$$

Wie zu erkennen ist, wird der Einfluss der Außen- bzw. der Innentemperatur durch Wahl geeigneter Korrekturfaktoren berücksichtigt, die in diesem Beispiel zeitabhängig sind. Auch kann zusätzlich noch ein additiver Korrekturfaktor hinzugefügt werden, der weitere Variationen wiedergibt.

In den oben aufgeführten Formeln treten eine Vielzahl von Korrekturfaktoren auf, für deren mathematische Beschreibung oft keine genauen Funktionen bekannt sind. Insbesondere sind die exakten Werte der Korrekturfaktoren fahrzeugspezifisch und ändern sich unter Umständen mit dem Alter des Fahrzeugs bzw. der Zusatzheizung. Um für die Korrekturfaktoren trotzdem genaue Werte oder die Zeitabhängigkeit der Faktoren zu verwenden, speichert die Temperaturbestimmungseinheit 3 vorzugsweise Kennlinien, welche die Abhängigkeiten der einzelnen Faktoren erfassen. Diese Kennlinien bzw. Kennfelder werden durch Messreihen empirisch bestimmt. So können für jeden Fahrzeugtyp individuelle Werte bestimmt werden, wodurch sich die Steuerung der Heizleistung optimal auf das Fahrzeug anpassen lässt.

Wie aus Formel (i) ersichtlich, hängt die zu erbringende Heizleistung neben der Kaltlufttemperatur auch von der Soll-Warmlufttemperatur ab, die in der einfachsten Ausführung der Zusatzheizung 1 konstant ist. Jedoch reicht eine solche Zusatzheizung dem Komfortbedürfnis eines Fahrzeuginsassen oft nicht aus. Insbesondere ist es für den Fahrzeuginsassen wichtig, die Temperatur der aus der Heizung strömenden Luft dem eigenen Komfortbedürfnis anpassen zu können.

Um diesem Bedürfnis Rechnung zu tragen, berücksichtigt die Steuereinheit der Zusatzheizung gemäß einer weiteren Ausführung der vorliegenden Erfindung zusätzlich einen Temperatursollwert, der aus einem über Anschluss 5a von einem externen Eingabegerät empfangen Wert ermittelt wird.

Der Temperatursollwert kann dabei auf verschiedene Arten aus dem empfangenen Signal ermittelt werden. Im einfachsten Fall entspricht der vom externen Gerät übermittelte Wert dem exakten Temperaturwert der von Benutzer eingegeben wurde. In diesem Fall lässt sich die Temperatur vom Fahrzeuginsassen kontinuierlich variieren bzw. einstellen. Oft wird jedoch die Zieltemperatur vom Fahrzeuginsassen nicht genau vorgegeben, sondern lediglich eine Komfortstufe ausgewählt, die einem bestimmten Temperaturwert entspricht. In diesem Fall wird unter Umständen nicht der exakte Temperaturwert sondern nur ein Wert an die Steuereinheit weitergegeben, der die ausgewählte Komfortstufe widerspiegelt. Zur Bestimmung der Soll-Warmlufttemperatur aus dem übermittelten Wert kann im Speicher der Steuereinheit auch eine Tabelle hinterlegt sein, in der die einzelnen Zieltemperaturen in Abhängigkeit vom empfangenen Signal aufgeführt sind.

Neben der Kaltlufttemperatur und der Soll-Warmlufttemperatur ist auch der Luftmassenstrom, der durch das Heizelement strömt, wichtig für die zu erbringende Heizleistung. In der einfachsten Ausführungsform der Zusatzheizung wird dieser Luftstrom konstant gewählt. Jedoch entspricht eine solche Ausführungsform oft nicht dem Komfortbedürfnis der Fahrzeuginsassen.

Um diesem Bedürfnis Rechnung zu tragen, berücksichtigt die Steuereinheit 2 der Zusatzheizung 1 gemäß einer weiteren Ausführung der vorliegenden Erfindung einen Luftmassenstrom, der aus einem über Anschluss 5a von einem externen Eingabegerät empfangen Wert ermittelt wird.

Da die Fahrzeuginsassen mit dem exakten Wert des Luftmassenstroms nicht viel anfangen können, wird der Luftmassenstrom vom Fahrzeuginsassen nicht genau vorgewählt, sondern lediglich eine Komfortstufe eingestellt, die einem bestimmten Luftmassenstrom entspricht. Wie bei der Wahl der Soll-Warmlufttemperatur, wird in diesem Fall unter Umständen nicht der exakte Wert des Luftmassenstroms, sondern nur ein Wert an die Steuereinheit 2 weitergegeben, der die ausgewählte Komfortstufe widerspiegelt. Dieser Wert kann z.B. vom Gebläse 8 oder direkt von einer benutzerbedienbaren Regeleinheit selbst stammen. In Abhängigkeit von der Art des übermittelten Wertes, wird der durch die Zusatzheizung 1 strömende Luftmassenstrom ermittelt. Wird der exakte Wert übertragen, so kann dieser direkt in Formel (i) eingesetzt werden. Drückt der übermittelte Wert jedoch nur die eingestellte Komfortstufe aus oder gibt er die Umdrehungsgeschwindigkeit des Gebläses an, so kann der Luftmassenstrom auch aus dem übermittelten Wert mittels einer im Speicher der Steuereinheit hinterlegten Tabelle, in der die Abhängigkeit des Luftmassenstroms vom empfangenen Signal beschrieben ist, ermittelt werden.

Neben einer benutzerdefinierten Komfortstufe ist es jedoch von Vorteil bei der Bestimmung der Soll-Warmlufttemperatur und des Luftmassenstroms Parameter wie beispielsweise die Fahrzeuggeschwindigkeit oder die Außentemperatur zu berücksichtigen. Diese sind bei offenen Fahrzeugen wie Cabriolets oder bei geöffneten Fenstern oder Schiebedächern von großer Bedeutung.

Durch den Fahrtwind kommt es bei einem geöffneten Verdeck oder bei geöffneten Fenstern zu Verwirbelungen im Inneren des Fahrzeugs. Diese Verwirbelungen wirken sich negativ auf den von der Heizung ausgestoßenen warmen Luftstrom aus. Zum einen kann durch den Fahrtwind die Geschwindigkeit der ausströmenden Luft beeinflusst werden, zum anderen kühlt der kalte Fahrtwind die ausgeblasenen Luftmassen ab. Beide Effekte sind in erster Linie von der Geschwindigkeit des Fahrzeugs abhängig.

Im folgenden werden zwei Ausführungsformen der vorliegenden Erfindung beschrieben, welche die Einflüsse des Fahrtwindes bei nicht geschlossener Fahrzeugkabine berücksichtigen.

Wie zuvor beschrieben führt der Fahrtwind zu einer Abkühlung der aus der Zusatzheizung strömenden Luft. Somit besitzt die den Fahrgast erreichende Luft nicht mehr die gewünschte Temperatur. Um einer solchen Abkühlung entgegenzuwirken variiert die vorliegende Erfindung gemäß einer bevorzugten Ausführungsform die Soll-Warmlufttemperatur in Abhängigkeit von der Geschwindigkeit des Fahrzeugs. Dabei wird diese Variation so gewählt, dass die vom Fahrtwind verursachte Abkühlung kompensiert wird.

Da mit steigender Fahrzeuggeschwindigkeit der Fahrtwind immer kälter wird, wird die Soll-Warmlufttemperatur vorzugsweise so gewählt, dass diese mit wachsender Fahrzeuggeschwindigkeit anwächst. In gleicher Weise wird die Soll-Warmlufttemperatur bei sinkender Fahrzeuggeschwindigkeit reduziert. In einfachster Weise lässt sich dies umsetzen, indem man eine lineare Abhängigkeit der Soll-Warmlufttemperatur von der Fahrzeuggeschwindigkeit fordert, jedoch kann auch eine nicht lineare Abhängigkeit der Soll-Warmlufttemperatur von der Fahrzeuggeschwindigkeit verwendet werden. Neben einer kontinuierlichen Variation der Soll-Warmlufttemperatur in Abhängigkeit von der Fahrzeuggeschwindigkeit kann diese auch stufenweise erfolgen.

Auch können für die Variation der Soll-Warmlufttemperatur anstelle absoluter Temperaturwerte den jeweiligen Fahrzeuggeschwindigkeiten entsprechende Temperaturkorrekturen zugeordnet werden, beispielsweise durch Verwendung einer mathematischen Funktion die angeben wie stark eine vorgewählte Soll-Warmlufttemperatur erhöht oder erniedrigt werden soll. Alternativ kann in der Steuereinheit auch ein Kennfeld hinterlegt sein, welches virtuelle Soll-Warmlufttemperaturen in Abhängigkeit von der Fahrzeuggeschwindigkeit und der Komfortstufe enthält. Tabelle 1 zeigt ein exemplarisches Kennfeld, in dem Soll-Warmlufttemperaturen für drei Komfortstufen und vier verschiedene Geschwindigkeiten eingetragen sind. Der Wert der Soll-Warmlufttemperatur bei Stillstand des Fahrzeugs kann gewissermaßen als Grundwert betrachtet werden, der in Abhängigkeit von der Fahrzeuggeschwindigkeit angepasst wird.

Tabelle 1: Abhängigkeit der Soll-Warmlufttemperatur von der Fahrzeuggeschwindigkeit und der Komfortstufe.

| Geschwindigkeitsabhängigkeit der Soll-Warmlufttemperatur | | | | |
|---|---|---|---|---|
| Fahrzeuggeschwindigkeit | 0 km/h | 50 km/h | 90 km/h | 140 km/h |
| Stufe 1 | 25 °C | 30 °C | 35 °C | 40 °C |
| Stufe 2 | 30 °C | 35 °C | 40 °C | 45 °C |
| Stufe 3 | 35 °C | 40 °C | 45 °C | 50 °C |

Da die "Kälte" des Fahrtwindes auch von der Außentemperatur abhängt, wird in einer weiteren Ausführungsform der vorliegenden Erfindung die Soll-Warmlufttemperatur zusätzlich an die Außentemperatur angepasst, so dass bei geringerer Außentemperatur automatisch eine höhere Soll-Warmlufttemperatur gewählt wird. Dabei kann die außentemperaturabhängige Soll-Warmlufttemperatur durch einen absoluten Temperaturwert angegeben werden. Jedoch können auch relative Temperaturwerte verwendet werden, die angegeben wie eine vorbestimmte Soll-Warmlufttemperatur in Abhängigkeit von der Außentemperatur korrigiert werden soll. Dabei ist zu beachten, dass die verschiedenen Temperaturkorrekturen, z.B. zur Anpassung der Soll-Warmlufttemperatur an die Fahrzeuggeschwindigkeit oder die Außentemperatur, miteinander kombiniert werden können, so dass die Soll-Warmlufttemperatur gleichzeitig an verschiedene Parameter angepasst werden kann.

Neben einer Abkühlung der aus der Heizung strömenden Luft führt der Fahrtwind auch zu einer Verringerung der Stärke der ausströmenden Luft. Um dieser Änderung des Luftstroms entgegenzuwirken, wird in der Regel vom Fahrzeuginsassen die Stärke des Luftstroms bei Zunahme der Fahrzeuggeschwindigkeit erhöht. Kommt es jedoch zu einer schnellen Verringerung der Geschwindigkeit, so kann der Fahrer den Luftstrom nicht schnell genug reduzieren, so dass ein zu starker Luftstrom in seinen Nacken bläst. Um mögliche unangenehme Folgen eines abrupten Stoppens des Fahrzeugs zu verhindern, reduziert die vorliegende Erfindung in Abhängigkeit eines Stillstandssignals, das den Stillstand des Fahrzeugs anzeigt, die Stärke des Luftmassenstroms. Es ist jedoch nicht zwingend, dass das Stillstandssignal erst bei exaktem Stillstand des Fahrzeugs erzeugt wird. Vielmehr kann das Stillstandssignal auch anzeigen, dass die Fahrzeuggeschwindigkeit unterhalb eines bestimmten Grenzwertes liegt und somit das baldige Stoppen des Fahrzeugs zu erwarten ist.

Um einer solchen Veränderung des Luftstroms auch während der gesamten Fahrt entgegenzuwirken, wird vorzugsweise der Luftmassenstrom in Abhängigkeit von der Geschwindigkeit des Fahrzeugs variiert. Dabei wird diese Variation so gewählt, dass die vom Fahrtwind verursachten Veränderungen durch Variation der Drehzahl des Lüfters kompensiert werden, so dass bei steigender Fahrzeuggeschwindigkeit der Luftmassenstrom ansteigt, während er bei sinkender Fahrzeuggeschwindigkeit reduziert wird. Da der Luftmassenstrom während der ganzen Fahrt auf die Fahrzeuggeschwindigkeit angepasst wird, kann in diesem Fall auf ein Signal, das den Stillstand des Fahrzeugs anzeigt, verzichtet werden. Dabei kann die Anpassung des Luftmassenstroms durch die Steuereinheit 2 erfolgen, welche zusätzlich die aufzubringende Heizleistung an den geänderten Luftmassenstrom automatisch anpasst. Jedoch ist es auch möglich, dass eine andere Steuereinheit im Fahrzeug die Lüfterdrehzahl in Abhängigkeit von der Fahrzeuggeschwindigkeit variiert und die Steuereinheit 2 gemäß dieser Anpassung die Heizleistung automatisch anpasst.

Die Variation der Drehzahl kann dabei auf verschiedene Arten erfolgen. So kann die Variation beispielsweise durch Verwendung einer kontinuierlichen linearen oder nicht linearen mathematischen Funktion vorgegeben werden, die den Fahrzeuggeschwindigkeiten entsprechende Drehzahlen zuordnet aus denen sich der Luftmassenstrom berechnen lässt. Auch kann der Luftmassenstrom anstelle einer kontinuierlichen Variation stufenweise an die Fahrzeuggeschwindigkeit angepasst werden. Alternativ kann in der Steuereinheit auch ein Kennfeld hinterlegt sein, welches Drehzahlen in Abhängigkeit von der Fahrzeuggeschwindigkeit und der Komfortstufe enthält. Tabelle 2 zeigt ein exemplarisches Kennfeld, in dem verschiedene Drehzahlen für drei Komfortstufen und vier verschiedene Geschwindigkeiten eingetragen sind.

Tabelle 2: Abhängigkeit der Gebläsedrehzahl von der Fahrzeuggeschwindigkeit und der Komfortstufe.

| Geschwindigkeitsabhängigkeit der Lüfterdrehzahl | | | | |
|---|---|---|---|---|
| Fahrzeuggeschwindigkeit | 0 km/h | 50 km/h | 90 km/h | 140 km/h |
| Stufe 1 | 1600 /min | 2200 /min | 2700 /min | 3000 /min |
| Stufe 2 | 1800 /min | 2400 /min | 2850 /min | 3000 /min |
| Stufe 3 | 2000 /min | 2550 /min | 3000 /min | 3000 /min |

Auch wenn das in Tabelle 2 dargestellte Kennfeld eine stufenweise Variation der Lüfterdrehzahl widerspiegelt, kann beispielsweise durch Interpolation zwischen den gespeicherten Werten, eine kontinuierliche Anpassung der Lüfterdrehzahl an die Fahrtgeschwindigkeit erreicht werden. Dabei ist zu beachten, dass die Drehzahlen unabhängig von der Außentemperatur sind.

Daneben ist es auch möglich, anstatt absoluter Lüfterdrehzahlwerte Korrekturwerte zu verwenden, die angeben wie stark eine vorgewählte Lüfterdrehzahl in Abhängigkeit von der Geschwindigkeit variiert wird.

Auch wenn die geschwindigkeitsabhängige Anpassung der Soll-Warmluft getrennt beschrieben wurden, so ist es von Vorteil, wenn die Zusatzheizung sowohl die Variation der Soll-Warmlufttemperatur als auch eine Änderung der Gebläsedrehzahl bei der Bestimmung der Heizleistung wie oben beschrieben berücksichtigt. Jedoch ist es nicht zwingend, dass beide Korrekturen ausgeführt werden.

Unter Umständen können die oben beschriebenen mathematische Funktion bzw. Kennfelder nicht theoretisch bestimmt werden und müssen empirisch ermittelt werden. Auch kann eine Kombination aus mathematischer Funktion und gespeichertem Kennfeld zur Anpassung der Soll-Warmlufttemperatur verwendet werden.

In den beiden zuvor beschriebenen Ausführungsformen wird die Soll-Warmlufttemperatur und die Drehzahl des Lüfters entscheidend von der Geschwindigkeit des Fahrzeugs bestimmt. Die Ermittlung Fahrzeuggeschwindigkeit kann dabei auf mehrere Arten erfolgen. So kann beispielsweise ein Tachosignal an die Steuereinheit 2 geliefert werden. Alternativ lässt sich die Geschwindigkeit auch aus der Rad- oder der Getriebedrehzahl oder vom ABS bestimmen. Des weiteren kann die Steuereinheit 2 ein Signal empfangen, dass den exakten Geschwindigkeitswert angibt, oder einen Wert, der z.B. eine Drehzahl angibt, aus dem mittels einer in der Steuereinheit 2 gespeicherter Funktionen oder Tabellen die Fahrzeuggeschwindigkeit abgeleitet wird. Auch ist eine explizite Bestimmung der Geschwindigkeit aus geschwindigkeitsabhängigen Parametern, wie beispielsweise der Raddrehzahl, nicht nötig. So ist es auch möglich Funktionen oder Kennfelder zu verwenden, welche die Abhängigkeit der aufzubringenden Heizleistung direkt von den Parametern beschreiben.

Wie aus den zuvor beschriebenen Ausführungsbeispielen und Formeln zu erkennen ist, führt eine Variation der Komfortstufe bzw. der Fahrzeuggeschwindigkeit zu einer entsprechenden Veränderung der aufzubringenden Heizleistung. Jedoch wirkt sich die Änderung der Heizleistung aufgrund der Trägheit der PTC-Elemente nicht sofort auf die Temperatur der ausströmenden Luft aus.

Beispielsweise steigt aufgrund des typischen Verhaltens einer PTC- Keramik die Oberflächentemperatur der Heizelemente bei einer Reduzierung der zu erwärmenden Luftmasse (z. B. reduzierte Lüfterdrehzahl) rasch an. Dies führt zu einem für den Fahrzeuginsassen ungewollten, unangenehmen "Übertemperierungseffekt". Dies ist insbesondere bei einer Anwendung als Kopfraumbeheizung zu vermeiden. Außerdem bewirkt die unvermeidbare thermische Trägheit des Heizelementes in der Regel eine Verzögerung in der Temperaturänderung der erwärmten Luft.

Um diese Trägheits- bzw. Übertemperierungseffekte zu kompensieren, wird gemäß einer weiteren bevorzugten Ausführungsform der vorliegenden Erfindung bei einer Änderung der vom Heizelement zu erbringenden Leistung, die vom Heizelement 4 aufgebrachte Heizleistung so gesteuert, dass diese zunächst für eine bestimmte Zeit vom berechneten Sollwert abweicht.

Figur 5 zeigt einen beispielhaften zeitlichen Verlauf der von einem Heizelement 3 aufgebrachten Heizleistung bei einer Erhöhung der Luftstromstärke und einer damit verbunden Erhöhung der aufzubringenden Heizleistung. Um eine schnellere Erwärmung der austretenden Luft zu erreichen und zur Kompensation der Trägheit des Heizelementes wird bei einem positiven Lastwechsel, z.B. einer Erhöhung der Komfortstufe, das Heizelement kurzzeitig mit einer höheren Heizenergie versorgt, als der gegenwärtigen Fahrzeuggeschwindigkeit zugeordnet ist. Durch die Wahl einer höheren Heizleistung wird erreicht, dass sich die Luft trotz der Trägheit wie gewünscht erwärmt.

In gleicher Weise wird die Steuereinheit 2 so konfiguriert, dass für das Heizelement bei einem negativen Lastwechsel, z.B. einer Erniedrigung der Komfortstufe, eine niedrigere Heizenergie gewählt wird, als für die jeweilige Fahrzeuggeschwindigkeit vorgesehen ist. Durch die Wahl einer niedrigeren Heizleistung wird eine eventuelle Temperaturerhöhung der Ausblastemperatur durch die in der thermischen Masse des Heizelementes gespeicherte Energie, aufgrund eines niedrigeren Luftdurchsatzes abgefangen. Durch die Verringerung der aufzubringenden Heizleistung bei negativen Lastwechseln, wird somit ein Überschwingen der Ausblastemperatur und ein dadurch verursachter Übertemperierungseffekt vermieden.

Vorzugsweise werden das oder die Heizelemente über eine Puls-Weiten-Modulation (PWM) angesteuert. Die Heizleistung wird über das Tastverhältnis eingestellt. Bei einem Lastwechsel wird dieses Tastverhältnis kurzzeitig entweder erhöht (bei positivem Lastwechsel, wenn in eine höhere Komfortsstufe geschaltet wird) oder erniedrigt (bei negativem Lastwechsel, also Umschaltung auf eine niedrigere Komfortstufe). Jedoch ist die exakte Steuerung der zeitlichen Erhöhung bzw. Erniedrigung des Tastverhältnisses theoretisch schwer zu erfassen. Deshalb wird sie vorzugsweise je nach Anforderung fahrzeugabhängig empirisch ermittelt.

Auch wenn die in Figur 5 dargestellte Einschaltüberhöhung während der gewählten Zeitspanne einen konstanten Wert annimmt, ist eine solche Wahl nicht zwingend. Auch kann eine zeitlich variable Einschalterhöhung verwendet werden, die von einem Anfangswert ausgehen kontinuierlich oder stufenweise auf die berechnete Sollleistung absinkt. In gleicher Weise kann für die Einschalterniedrigung ein konstanter Wert oder ein zeitlich variabler Wert, der sich von einem Anfangswert auf die Sollleistung erhöht, verwendet werden.

Wie in den zuvor beschriebenen bevorzugten Ausführungsformen zu erkennen ist, ist eine exakte oder vollständige mathematische Beschreibung der Heizcharakteristiken der Zusatzheizung oft nicht möglich, so dass es unter Umständen notwendig ist, auf experimentell bestimmte Kennfelder zurückzugreifen. Durch geeignete Auswahl der Kennfelder ist es jedoch auch möglich gänzlich auf eine mathematische Beschreibung zur Steuerung der Zusatzheizung zu verzichten.

In einer weiteren bevorzugten Ausführungsform der vorliegenden Erfindung wird im Speicher der Steuereinheit bzw. der Temperaturbestimmungseinheit ein Kennfeld bzw. mehrere Kennfelder gespeichert, die in Abhängigkeit von den zuvor beschriebenen Parametern, wie der Kaltlufttemperatur, der Fahrzeuggeschwindigkeit und dergleichen, angeben, welche Heizleistung vom Heizelement aufzubringen ist damit die aus der Heizung austretende Luft eine gewisse Soll-Warmlufttemperatur besitzt.

Zur Bestimmung der Kennfelder werden für eine Vielzahl von Ausgangsparametern wie z.B. der Kaltlufttemperatur, der Größe des Luftmassenstroms, Öffnungszustand der Fenster bzw. des Verdecks, Soll-Warmlufttemperatur und dergleichen, Messreihen durchgeführt um experimentell die Heizleistung zu bestimmen, die das Heizelement abgeben muss, um die zu erwärmende Luft auf eine Zieltemperatur aufzuheizen. Aufgrund der für ein Fahrzeug bzw. Fahrzeugtyp individuell bestimmten Charakteristiken, kann die Steuerung der Zusatzheizung individuell und exakt auf ein Fahrzeug bzw. einen Fahrzeugtyp angepasst werden.

Die Bestimmung der Kennfelder kann dabei auch in verschiedene Abschnitte getrennt werden. So kann z.B. der Hersteller der Zusatzheizung deren Eigenschaften im Werk experimentell ermitteln und in einem ersten Kennfeld speichern, wohingegen der Autohersteller anschließend ein zweites Kennfeld bestimmt, das die Einflüsse des Fahrzeugs erfasst.

Auch ist es nicht nötig, ein Kennfeld für jedes einzelne Fahrzeug zu bestimmen. Da die Abweichungen der Eigenschaften innerhalb eines Fahrzeugtyps bzw. eines Zusatzheizungstyps nur sehr gering sind, reicht es in der Regel aus, die Kennfelder lediglich für ein einziges Fahrzeug eines Fahrzeugtyps und eine einzige Zusatzheizung eines Zusatzheizungstyps zu bestimmen.

Zusätzlich erlaubt die Steuerung mittels Kennfelder eine einfache Modifikation der Steuereinheit bzw. der Temperaturbestimmungseinheit, da die in diesen Modulen/Speichereinheiten gespeicherten Daten leicht über Anschlüsse 5a und 5b aktualisiert werden können.

Da Kraftfahrzeugsheizungen in der Regel in Luftkanälen des Fahrzeugs angebracht werden und mittels Gebläsen mit Frischluft versorgt werden, kann es bei Blockaden des Luftein- oder -Auslasses oder beim Ausfall des Gebläses zu Überhitzungen kommen. Da sich in diesen Fällen der Luftmassenstrom verringert oder sich die Luft im Heizelement staut, erhitzt sich die im Luftkanal befindliche Luft bei gleich bleibender Heizleistung sehr stark auf. Unter Umständen kann deshalb die Temperatur der ausströmenden Warmluft 60 °C überschreiten.

Um Probleme durch Behinderungen des Luftstroms zu vermeiden, wird von der Steuereinheit gemäß einer weiteren bevorzugten Ausführungsform eine Fehlererkennung durchgeführt. In dieser Ausführungsform ist in der Steuereinheit eine Plausibilitätsprüfung implementiert, welche die Ist-Drehzahl des Lüfters mit der am Steuereingang des Lüfters anliegenden Spannung vergleicht. Da bei einer Verringerung der vom Lüfter umgesetzten Luftmasse, z.B. aufgrund einer Verstopfung des Lufteinlasses, eine geringere Spannung benötigt wird, um eine bestimmte Drehzahl zu erreichen, ist dieser Spannungswert ein geeigneter Indikator für Probleme im Luftkanal.

Deshalb wird, falls die Spannung, eventuell abzüglich einer festzulegenden Toleranzgrenze, zu weit heruntergeregelt werden muss um eine bestimmte Drehzahl einzustellen, von der Steuereinheit 2 ein geringer Wert für den Luftmassenstrom verwendet. Beispielsweise kann die Heizleistung um eine (Komfort-)Stufe zurückgeschaltet werden um dem reduzierten Luftmassenstrom zu kompensieren. Ist mit der Verringerung des Luftmassenstromwerts bzw. mit der damit verbunden Heizleistungsreduktion die Plausibilität immer noch nicht gegeben, wird der berücksichtigte Wert des Luftmassenstroms weiterhin verringert. Dies ist bis zum völligen Abschalten des Heizmoduls möglich.

Störungen im Luftkanal lassen sich jedoch auch direkt am Heizelement erkennen. PTC-Heizelemente besitzen einen temperaturabhängigen Ohmschen Widerstand, der mit steigender Temperatur des Heizelements ansteigt. Deshalb sinkt der durch das Heizelement fließende Strom bei konstanter Spannung, wenn sich das Heizelement erhitzt. Strömt Luft durch die mit dem Heizelement verbundenen Radiatorelemente, so entzieht die Luft dem Heizelement Wärmeenergie; das Heizelement wird quasi gekühlt. Dadurch bleibt der elektrische Widerstand des Heizelements konstant, obwohl Heizleistung an die zu erwärmende Luft abgegeben wird. Deshalb muss bei einem kontinuierlichen Luftstrom über das PTC-Element der durch das Element fließende Strom über einem festzulegenden Wert liegen. Bei einem gestörten Luftstrom, z.B. bei Blockade oder bei einem fehlerhaften Lüfter, sinkt der Stromwert unterhalb der festgelegten Grenze (PTC-Effekt). Dies führt zu einem Abschalten des Heizelementes.

Auch wenn es durch den oben beschriebenen PTC-Effekt das Heizelement passiv abgeschaltet wird, kann die ausströmende warme Luft vor dem Abschalten unter Umständen auf Temperaturen erwärmt werden, die von den Fahrzeuginsassen als unangenehm oder störend empfunden werden. Um dies zu vermeiden, wird vorzugsweise der Strom über dem Heizelement gemessen. Sinkt der Wert des Signals unter einen festgelegten Wert, so wird das Heizelement 4 von der Steuereinheit abgeschaltet.

Auch wenn in der vorhergehenden Beschreibung die Erfindung anhand bevorzugter Ausführungsformen beschrieben wurde, so sind die einzelnen Ausführungsformen jedoch nicht als voneinander unabhängige Beispiele zu betrachten. Vielmehr beschreiben die einzelnen Ausführungsformen Teilaspekte der vorliegenden Erfindung, deren Merkmale miteinander kombiniert werden können jedoch nicht müssen.

Obwohl in den zuvor beschriebenen Ausführungsformen die Zusatzheizung 1 eine separate Temperaturbestimmungseinheit 3 und Steuereinheit 2 aufweist, ist diese spezielle Ausführung für eine Zusatzheizung 1 gemäß der vorliegenden Erfindung nicht zwingend. Alternativ können die Funktionen auch in einem einzigen Bauteil integriert sein, das beispielsweise einen Speicher und einen Prozessor enthält, der die im Speicher gespeicherten Kontrollprogramme zur Temperaturbestimmungs- und Steuerroutinen zur Kontrolle des Heizelements verwendet.

Auch kann der Steuereinheit 2 zur Bestimmung des Einflusses des Fahrtwinds ein Signal zugesandt werden, dass Auskunft über den Verdeckstatus oder den Öffnungsgrad der Fenster enthält. So kann die Steuereinheit 2 mittels dieses Signal erkennen, ob das Verdeck oder Schiebedach geschlossen oder offen ist oder welche Fenster geöffnet und wie weit diese geöffnet sind.

Zusammenfassend gibt die vorliegende Erfindung einen Kraftfahrzeugsitz mit einen Luftkanal, der wenigstens eine Luftausstromöffnung und einen elektrische Zusatzheizung aufweist an, die Temperaturüberschwinger in der erwärmten Luft sicher vermeidet. Dazu wird die Temperatur der in die Heizung einströmenden Luft bestimmt und vorzugsweise in Abhängigkeit von der gewünschten Austrittstemperatur in eine Heizleistung zur Ansteuerung der Heizelemente umgesetzt. Diese Umsetzung erfolgt vorzugsweise über ein abgespeichertes Kennlinienfeld, das in einfacher Weise die Berücksichtigung einer Mehrzahl von Fahrzeugparametern wie der Geschwindigkeit des Fahrzeugs, des Verdecks usw. zulässt. Dabei kann auch die Temperatur der einströmenden Luft basierend auf im Fahrzeug schon vorhandenen Temperaturwerten hergeleitet werden. Auf diese Weise kann sehr einfach eine benutzerfreundliche elektrische Heizung realisiert werden, die sich bevorzugt dezentral im Fahrzeug einsetzen lässt, beispielsweise im Kraftfahrzeugsitz oder im Fahrzeugfond. Auch bei sich dynamisch ändernden Betriebszuständen des Kraftfahrzeugs können Temperaturschwankungen in der erwärmten Luft sicher und in einfacher Weise vermieden werden.

**Patentansprüche**

1. Kraftfahrzeugsitz mit einem Luftkanal (7), der wenigstens eine im oberen Bereich des Sitzes vorgesehene Luftausstromöffnung zum Versorgen des Kopf-,Schulter- oder Nackenbereiches eines Fahrzeuginsassen und eine elektrische Zusatzheizung für ein Kraftfahrzeug mit wenigstens einem PTC-Heizelement (4) zur Erwärmung der durch die Zusatzheizung strömenden Luft und einer Steuereinheit (2) zur Einstellung der Heizleistung des wenigstens einen Heizelements (4), umfassend

   eine Temperaturbestimmungseinheit (3) zur Ermittlung der Kaltlufttemperatur der das Heizelement (4) anströmenden und durch das Heizelement (4) zu erwärmenden Luft,
   wobei die Steuereinheit (2) die vom Heizelement (4) zu erbringende Heizleistung in Abhängigkeit von der ermittelten Kaltlufttemperatur einstellt,
   **gekennzeichnet dadurch dass**
   die Steuereinheit (2) die zu erbringende Heizleistung zusätzlich in Abhängigkeit von einer Soll-Warmlufttemperatur der aus der Zusatzheizung strömenden Luft einstellt, und die Kaltlufttemperatur aus einer gewichteten Kombination einer gemessenen Fahrzeuginnenraum- und einer gemessenen Fahrzeugaußenraumtemperatur bestimmt wird.

2. Kroftfahrtengsib nach Anspruch 1, wobei der gemessene Temperaturwert von einer Kraftfahrzeugklimaanlage zur Verfügung gestellt wird.

3. Kroftfahrtengsib nach Anspruch 1 oder 2, wobei die Soll-Warmlufttemperatur in Abhängigkeit vom offenen/geschlossenen Zustand des Fahrzeugs automatisch eingestellt wird.

4. Kroftfahrtengsib nach Anspruch 3, wobei die Soll-Warmlufttemperatur in Abhängigkeit von der Außentemperatur automatisch eingestellt wird.

5. Kroftfahrtengsib nach Anspruch 4, wobei die Soll-Warmlufttemperatur in Abhängigkeit von der Fahrzeuggeschwindigkeit automatisch eingestellt wird.

6. Kroftfahrtengsib nach einem Ansprüche 3 bis 5, wobei die Steuereinheit (2) einen Speicher umfasst, der ein Kennfeld enthält, das die Abhängigkeit der Soll-Warmlufttemperatur von Öffnungszustand des Fahrzeugs, der Außentemperatur und/oder von der Fahrzeuggeschwindigkeit angibt.

7. Kroftfahrtengsib nach Anspruch 1 oder 2, wobei die Soll-Warmlufttemperatur von einem Benutzer vorwählbar ist.

8. Kroftfahrtengsib nach einem der Ansprüche 1 bis 7, wobei die Steuereinheit (2) zur Einstellung der zu erbringenden Heizleistung zusätzlich einen vorwählbaren durch die Zusatzheizung strömenden Luftmassenstrom berücksichtigt.

9. Kroftfahrtengsib nach Anspruch 8, wobei der Luftmassenstrom in Abhängigkeit vom offenen/geschlossenen Zustand des Fahrzeugs automatisch eingestellt wird.

10. Kroftfahrtengsib nach Anspruch 9, wobei der Luftmassenstrom basierend auf einem Stillstandssignal, das auf den Stillstand des Fahrzeugs hinweist, automatisch auf einen vorwählbaren Wert eingestellt wird.

**11.** Kroftfahrtengsib nach Anspruch 9, wobei der Luftmassenstrom in Abhängigkeit von der Fahrzeuggeschwindigkeit automatisch eingestellt wird.

**12.** Kroftfahrtengsib nach einem der Ansprüche 9 bis 11, wobei die Steuereinheit (2) einen Speicher umfasst, der ein Kennfeld enthält, das die Abhängigkeit des Luftmassenstroms von Öffnungszustand des Fahrzeugs, dem Stillstandssignal und/oder von der Fahrzeuggeschwindigkeit angibt.

**13.** Kroftfahrtengsib nach einem der Ansprüche 1 bis 12 wobei die Steuereinheit (2) bei Änderung der zu erbringenden Heizleistung diese für eine vorgegebene Zeitspanne nach der Änderung entsprechend der Änderung zusätzlich erhöht oder erniedrigt.

**14.** Kroftfahrtengsib nach Anspruch 13, wobei die Steuereinheit (2) die Erhöhung bzw. Erniedrigung der zu erbringende Heizleistung während der vorgegebenen Zeitspanne konstant hält.

**15.** Kroftfahrtengsib nach Anspruch 13, wobei die Steuereinheit (2) die Erhöhung bzw. Erniedrigung der zu erbringenden Heizleistung während der vorgegebenen Zeitspanne kontinuierlich oder stufenweise auf Null reduziert.

**16.** Kroftfahrtengsib nach einem der Ansprüche 1 bis 15, wobei die Steuereinheit (2) ein Kennfeld umfasst, das die Abhängigkeit der aufzubringenden Heizleistung von Eingangsgrößen beschreibt, und die Einstellung der zu erbringenden Heizleistung gemäß den Werten des Kennfelds erfolgt.

**17.** Kroftfahrtengsib nach einem der Ansprüche 1 bis 16, wobei die Steuereinheit (2) das Heizelement (4) abschaltet falls der über das Heizelement gemessene Strom eine vorgegebene Grenze unterschreitet.

**18.** Kroftfahrtengsib nach einem der Ansprüche 1 bis 16, wobei die Steuereinheit (2) die vom Heizelement (4) aufgebrachte Heizleistung reduziert, falls die am Luftstrom erzeugenden Gebläse (8) anliegende Spannung einen Grenzwert unterschreitet.

**19.** Kroftfahrtengsib nach einem der Ansprüche 1 bis 18, wobei der gemessene Temperaturwert oder die am Gebläse (8) anliegende Spannung über einen Fahrzeugbus zur Verfügung gestellt wird.

**20.** Kroftfahrtengsib nach einem der Ansprüche 1 bis 19, mit einem Gebläse (8), das die zu erwärmende Luft dem Heizelement (4) zuführt.

**Claims**

**1.** A motor vehicle seat comprising an air duct including at least one air discharge opening provided in the upper area of the seat and used for supplying air to the head, shoulder and neck area of a vehicle passenger, and further including an electric auxiliary heating for a motor vehicle, including at least one PTC heating element (4) for heating the air flowing through the auxiliary heating, and a control unit (2) for adjusting the heating power of the at least one heating element (4), comprising

a temperature determination unit (3) for determining the cold air temperature of the air that flows through the auxiliary heating and is to be heated by the heating element (4),
wherein the control unit (2) adjusts in dependence upon the determined cold air temperature the heating power to be generated by the heating element (4),
**characterized in that**
the control unit further adjusts the heating power to be generated in dependence upon a target hot air temperature of the air discharged from the auxiliary heating, and
the cold air temperature is determined from a weighted combination of a temperature inside the vehicle and a temperature outside the vehicle.

**2.** A motor vehicle seat according to claim 1, wherein the measured temperature value is provided by an air conditioning system of the motor vehicle.

**3.** A motor vehicle seat according to claim 1 or 2, wherein the target hot air temperature is automatically adjusted in dependence upon the open/closed condition of the vehicle.

4. A motor vehicle seat according to claim 3, wherein the target hot air temperature is automatically adjusted in dependence upon the outside temperature.

5. A motor vehicle seat according to claim 4, wherein the target hot air temperature is automatically adjusted in dependence upon the vehicle speed.

6. A motor vehicle seat according to any of claims 3 to 5, wherein the control unit (2) comprises a memory containing a characteristic field which indicates the dependence of the target hot air temperature on the opening condition of the vehicle, the outside temperature or the vehicle speed,

7. A motor vehicle seat according to claim 1 or 2, wherein the target hot air temperature is selectable by a user.

8. A motor vehicle seat according to any of claims 1 to 7, wherein, for adjusting the heating power to be generated, the control unit (2) additionally takes into account a preselectable air mass flow through the auxiliary heating.

9. A motor vehicle seat according to claim 8, wherein the air mass flow is adjusted automatically in dependence upon the open/closed condition of the vehicle.

10. A motor vehicle seat according to claim 9, wherein the air mass flow is adjusted automatically to a preselectable value on the basis of a halt signal indicative of the stationary condition of the vehicle.

11. A motor vehicle seat according to claim 9, wherein the air mass flow is adjusted automatically in dependence upon the vehicle speed.

12. A motor vehicle seat according to any of claims 9 to 11, wherein the control unit (2) comprises a memory containing a characteristic field which indicates the dependence of the air mass flow on the opening condition of the vehicle, the halt signal or the vehicle speed.

13. A motor vehicle seat according to any of claims 1 to 12, wherein, when the heating power to be generated changes, the control unit (2) additionally increases or decreases the heating power for a predetermined period of time after the change, in accordance with said change.

14. A motor vehicle seat according to claim 13, wherein the increase or decrease of the heating power to be generated is maintained constant by the control unit (2) during said predetermined period of time.

15. A motor vehicle seat according to claim 13, wherein the control unit (2) reduces the increase or decrease of the heating power to be generated continuously or stepwise to zero during said predetermined period of time.

16. A motor vehicle seat according to any of claims 1 to 15, wherein the control unit (2) comprises a characteristic field which describes the dependence of the heating power to be generated on input values, and wherein the heating power to be generated is adjusted in accordance with the values of said characteristic field.

17. A motor vehicle seat according to any of claims 1 to 16, wherein the control unit (2) deactivates the heating element (4) if the current measured across the heating element drops below a predetermined limit.

18. A motor vehicle seat according to any of claims 1 to 16, wherein the control unit (2) reduces the heating power generated by the heating element (4) if the voltage applied to the air current generating blower (8) drops below a limit value.

19. A motor vehicle seat according to any of claims 1 to 18, wherein the measured temperature value or the voltage applied to the blower (8) is made available through a vehicle bus.

20. A motor vehicle seat according to any of claims 1 to 19, comprising a blower (8) which supplies the air to be heated to the heating element (4).

**Revendications**

1.  Siège de véhicule automobile comportant un canal d'air (7), au moins une ouverture d'évacuation d'air pourvue dans la partie supérieure du siège pour ventiler les parties de la tête, des épaules ou du cou d'un passager, ainsi qu'un chauffage électrique d'appoint pour un véhicule automobile avec au moins un élément chauffant PTC (4) pour réchauffer l'air circulant à travers le chauffage d'appoint et une unité de commande (2) pour régler la puissance de chauffage de l'au moins un élément de chauffage (4), comprenant
    une unité de détermination de température (3) pour établir la température d'air froid de l'air à réchauffer par l'élément de chauffage (4) qui parvient à l'élément de chauffage (4),
    dans lequel l'unité de commande (2) règle la puissance de chauffage à fournir par l'élément de chauffage (4) en fonction de la température d'air froid déterminée,
    **caractérisé en ce que**
    l'unité de commande (2) règle en outre la puissance de chauffage à fournir en fonction d'une température d'air chaud souhaitée de l'air sortant du chauffage d'appoint, et
    la température d'air froid est déterminée par une combinaison pondérée d'une température d'habitacle du véhicule et de la température extérieure du véhicule.

2.  Siège de véhicule automobile selon la revendication 1, dans lequel la valeur de température mesurée est mise à disposition par une installation d'air conditionné de véhicule automobile.

3.  Siège de véhicule automobile selon la revendication 1 ou 2, dans lequel la température d'air chaud souhaitée est réglée automatiquement en fonction de l'état ouvert ou fermé du véhicule.

4.  Siège de véhicule automobile selon la revendication 3, dans lequel la température d'air chaud souhaitée est réglée automatiquement en fonction de la température extérieure.

5.  Siège de véhicule automobile selon la revendication 4, dans lequel la température d'air chaud souhaitée est réglée automatiquement en fonction de la vitesse du véhicule.

6.  Siège de véhicule automobile selon l'une des revendications 3 à 5, dans lequel l'unité de commande (2) comporte une mémoire contenant un champ caractéristique qui indique la dépendance de la température d'air chaud souhaitée par rapport à l'état d'ouverture du véhicule, à la température extérieure et/ou à la vitesse du véhicule.

7.  Siège de véhicule automobile selon la revendication 1 ou 2, dans lequel la température d'air chaud souhaitée peut être présélectionnée par un utilisateur.

8.  Siège de véhicule automobile selon l'une des revendications 1 à 7, dans lequel l'unité de commande (2) prend également en compte un écoulement de masse d'air présélectionnable traversant le chauffage d'appoint pour le réglage de la puissance de chauffage à fournir.

9.  Siège de véhicule automobile selon la revendication 8, dans lequel l'écoulement de masse d'air est réglé automatiquement en fonction de l'état ouvert ou fermé du véhicule.

10. Siège de véhicule automobile selon la revendication 9, dans lequel l'écoulement de masse d'air est réglé automatiquement à une valeur présélectionnable sur la base d'un signal d'état d'arrêt indiquant l'arrêt du véhicule.

11. Siège de véhicule automobile selon la revendication 9, dans lequel l'écoulement de masse d'air est réglé automatiquement en fonction de la vitesse du véhicule.

12. Siège de véhicule automobile selon l'une des revendications 9 à 11, dans lequel l'unité de commande (2) comporte une mémoire contenant un champ caractéristique qui indique la dépendance de l'écoulement de masse d'air par rapport à l'état d'ouverture du véhicule, au signal d'état d'arrêt et/ou à la vitesse du véhicule.

13. Siège de véhicule automobile selon l'une des revendications 1 à 12, dans lequel l'unité de commande (2), lors d'une variation de la puissance de chauffage à fournir, augmente ou diminue en outre celle-ci pendant une durée prédéterminée en fonction de ladite variation.

14. Siège de véhicule automobile selon la revendication 13, dans lequel l'unité de commande (2) maintient constante l'augmentation ou la diminution de la puissance de chauffage à fournir durant la durée prédéterminée.

15. Siège de véhicule automobile selon la revendication 13, dans lequel l'unité de commande (2) réduit jusqu'à zéro, de manière continue ou étagée, l'augmentation ou la diminution de la puissance de chauffage à fournir durant la durée prédéterminée.

16. Siège de véhicule automobile selon l'une des revendications 1 à 15, dans lequel l'unité de commande (2) comprend un champ caractéristique qui décrit la dépendance de la puissance de chauffage à fournir par rapport à des grandeurs d'entrée, et le réglage de la puissance de chauffage à fournir s'effectue en fonction des valeurs du champ caractéristique.

17. Siège de véhicule automobile selon l'une des revendications 1 à 16, dans lequel l'unité de commande (2) coupe l'élément de chauffage (4) si le courant mesuré traversant l'élément de chauffage descend sous un seuil prédéterminé.

18. Siège de véhicule automobile selon l'une des revendications 1 à 16, dans lequel l'unité de commande (2) réduit la puissance de chauffage fournie par l'élément de chauffage (4) si la tension correspondant au mécanisme de soufflerie (8) qui produit la circulation d'air descend sous un seuil prédéterminé.

19. Siège de véhicule automobile selon l'une des revendications 1 à 18, dans lequel la valeur de température mesurée ou la tension correspondant au mécanisme de soufflerie (8) est fournie par un bus de véhicule.

20. Siège de véhicule automobile selon l'une des revendications 1 à 19, comportant un mécanisme de soufflerie (8) qui amène l'air à réchauffer à l'élément de chauffage (4).

# Figur 1

# Figur 2

| S1: Ermittlung der Kaltlufttemperatur |
|---|

↓

| S2: Bestimmung der zu erbringende Heizleistung |
|---|

↓

| S3: Einstellen der Heizleistung des Heizelements |
|---|

# Figur 5

Einschaltüberhöhung

Berechnete Sollleistung

- - - - - - - - Leistung Modul [%]

# Figur 3

# Figur 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10317512
- US 2005085968 A
- US 2006175877 A
- DE 102004030705
- EP 1511651 B